# EUROPEAN PATENT SPECIFICATION

(11) **EP 3 998 206 B1**
(45) Date of publication and mention of the grant of the patent: **19.02.2025**
(21) Application number: 21158188.9
(22) Date of filing: 19.02.2021
(51) Int. Cl.: B64C 29/00, B64C 9/16, B64D 27/02, B64C 11/00

(54) **AIRCRAFT**
LUFTFAHRZEUG
AÉRONEF

(43) Date of publication of application: 18.05.2022
(73) Proprietor: Lilium eAircraft GmbH, 82234 Wessling (DE)
(72) Inventor: Möbius, Andreas, 82234 Weßling (DE); Sainz de la Maza, Javier, 82234 Weßling (DE); Clements, Simon, 82234 Weßling (DE)
(74) Representative: Schmidt, Steffen

(56) References cited:
- EP-A2- 3 425 777
- DE-A1- 102015 207 445
- DE-B4- 112010 005 656
- US-A- 2 371 976
- US-A- 3 121 544
- US-A- 3 179 354
- US-A- 4 717 097
- US-A1- 2009 256 026
- US-A1- 2018 002 016
- US-A1- 2020 094 946
- US-B2- 9 376 203
- YAVUZ HANDE: "Materials Selection for Aircraft Skin Panels by Integrating Multiple Constraints Design with Computational Evaluations", PROCEDIA STRUCTURAL INTEGRITY, vol. 21, 23 August 2019 (2019-08-23), pages 112 - 119, XP055823555, ISSN: 2452-3216, DOI: 10.1016/j.prostr.2019.12.092

## Description

### Field

The invention relates to an aircraft, in particular an aircraft capable of vertical take off and landing (VTOL).

### Related Art

Aircraft capable of vertical take off and landing (VTOL) have the potential to incorporate both the advantages of helicopters, namely starting and landing using the limited space and/or in rough terrain, as well as the advantages of conventional aircraft, such as high traveling velocities and cruising efficiently, with one another. Challenges in the design of VTOL aircraft include the necessity that, on the one hand, large propeller areas are required for the provision of a sufficient mass flow to create thrust into the vertical direction for takeoff or landing, and at the same time limit the energy consumption. On the other hand, propellers must be configured for the least amount of aerodynamic resistance for cruising, when the lift is dynamically created by means of suitable wing profiles. The reduction of energy consumption is particularly relevant in the case of electrically powered VTOL aircraft (eVTOL) such as the eVTOL aircraft described in Lilium^{®}'s patent applications US 2016/0023754 A1 or US 2016/0311522 A1 corresponding to DE 10 2015 207 445 A1.

Vertical take-off aircraft designed for hovering flight comprise engines that can be rotated about a pivot axis. During take-off, during landing, or during hovering flight, the engines are placed in a take-off/landing position in which the direction of thrust is oriented vertically. In order to accelerate the aircraft after take-off, the engines may be continuously pivoted in such a way that the direction of thrust is ultimately aligned with a cruise flight direction. The thrust provided by the engine to power the aircraft is transferred towards the fuselage through a mechanical system attaching the engine to the fuselage and allowing the engine to be pivoted in relation to the fuselage. The mechanical system has to be capable of reliably holding the engine in a desired, well-defined position with regard to the fuselage. In order to allow for energy-efficient cruising, hovering, take-off and/or landing, the mechanical system should be as lightweight as possible. Especially for energy-efficient cruising, the mechanical system should add as little drag as possible.

For conventional aircraft, US 4,773,620 A describes a device for actuating aircraft control surfaces having an actuator disposed within the control surface. The control surface described is an aileron pivotably attached to a wing box. The actuator is a longitudinally extendable hydraulic piston which is, on one hand, fastened to the wing structural box eccentrically with regard to the pivot axis of the control surface, and, on the other hand, rearwardly within the control surface. By changing the length of the hydraulic piston actuator, the pivoting position of the control surface in relation to the wing structural box can be controlled. The hydraulic piston actuator is a heavy and bulky. It is a further disadvantage of the described design that, in order to achieve large pivoting angles, such as required for control surfaces for example of VTOL aircraft, the mechanical system including the piston actuator would need to breach the aerofoil, thereby significantly increasing drag. A loss of pressure of the hydraulic actuator would cause the control surface to pivot uncontrollably.

US 2009 0 256 026 A1 describes an aircraft equipped with hingeless rotors on tilting nacelles. US 3,179,354 A1 and US 2018 0 002 016 A1 are related to vertical take off aircraft.

US 4,717,097 A1 relates to aircraft wings which have aileron-associated spoilers and trailing edge flaps for reducing approach speeds.

US 9,376,203 B2 relates to articulation and operating means of a control surface on a fixed structural element of a wing element of an aircraft.

US 2,371,976 A1 relates to an actuating mechanism for closures controlling the opening and closing of slots in airfoil surfaces.

### Description

It is an object of the invention to overcome the disadvantages of the prior art, in particular to provide mechanically reliable and energy saving means for attaching an engine or other variable lift body to the fuselage of an aircraft, particularly a VTOL, more particularly an eVTOL. This objective is solved by the subject matter of independent claim 1.

Accordingly, an aircraft, particularly an aircraft capable of vertical take off and landing, shall be provided. The aircraft comprises a load carrying structure, and a variable lift body defining an aerofoil. The variable lift body is movably attached to the load carrying structure. The load carrying structure may for instance be the aircraft's fuselage, a wing box preferably rigidly attached to the fuselage, or another structural component of the aircraft configured for carrying a mechanical load, such as a structural support or casing of a functional aircraft component, including its at least one engine. It shall be clear that when referring to a connection to the fuselage herein, the connection can refer to indirect connection to the fuselage, for instance directly to a primary lift body which is rigidly attached to the fuselage. The variable lift body is pivotable around the first axis. The first axis may correspond to a lateral axis of the aircraft and/or a pitch axis of the aircraft. According to the invention, the aircraft further comprises a rotary actor adapted to cause the variable lift body pivot in relation to the load carrying structure. The rotary actor may be realized as an electric motor, in particular a rotary servo motor or a stepper motor. In particular, the electric motor includes a stator and a rotor. The electric motor causes a relative movement between on the one hand the stator and on the other hand the rotor. The rotary actor may include a transmission for transforming relatively little torque provided at relatively large rpm by the electromotor into relatively large torque provided at relatively little rpm at an output of the rotary actor. In particular, the rotary actor comprises a self-locking transmission. The rotary actor preferably includes a harmonic gearing. The rotary actuator, in particular the transmission, may be configured to limit the angular range of the pivoting movement of the variable lift body with regard to the load carrying structure around the first axis to a predefined angular pivoting range, in particular between a cruising position and of vertical takeoff/landing position. The angular pivoting range limited by the rotary actor may be defined to be less than 180°, in particular less than 135°. Alternatively or additionally, the angular pivoting range allowed for by the rotary actor may be at least 60°, in particular at least 90°, more particularly at least 100°. The angular pivoting range may be in the range of 125° ±5°. It may be preferred that the variable lift body may have a primary arrangement, in particular corresponding to a horizontal direction for an aircraft sitting on a horizontally level ground with its undercarriage. In relation to the primary arrangement, the angular pivoting range may be limited to no more than 135 ° downwards, in particular no more than 115 ° downwards, more particularly no more than 90° downwards. Alternatively or additionally, in relation to the primary arrangement, the angular pivoting range may be limited to no more than 30° upwards, in particular no more than 10° upwards, more particularly no more than 5° upwards. Alternatively or additionally, in relation to the primary arrangement, the angular pivoting range may be at least 60° downwards, in particular at least 90°, preferably at least 100° downwards. Alternatively or additionally, in relation to the primary arrangement, the angular pivoting range may be at least 0° upwards, in particular at least 5° upwards, preferably at least 10° upwards. It shall be clear that one of the rotor or the stator may be stationarily connected either to the variable lift body or to the load carrying structure so as to cause a relative movement of the variable lift body in relation to the load carrying structure. It may be preferred that the stator is stationarily coupled to either the load carrying structure or to the variable lift body. In particular, the rotor may be rigidly coupled directly or indirectly via a transmission to the other one of either the variable lift body or the load carrying structure. In case the electric motor is provided with a transmission, which may comprise one or more stages, a torque output shaft of the transmission, preferably a torque output shaft of the stage furthest from the electric motor, is rigidly coupled to either the variable lift body or the load carrying structure, whichever one is not stationarily coupled to the stator. It shall be clear, that the scope of the invention also encompasses a reversed design in which the transmission is coupled to the stator and the rotor is held stationarily attached to one of the load carrying structure or variable lift body.

The rotary actor is arranged within the aerofoil defined by the variable lift body. It is preferred that the aerofoil surrounds the rotary actor completely, particularly in the longitudinal and/or vertical direction of the aircraft, in particular such that the drag of the variable lift body remains unaffected by the geometry of the rotary actor. The aerofoil of the variable lift body may realize a housing encasing the rotary actor, in particular regardless of the pivoting position of the variable lift body with regard to the fuselage.

According to one embodiment, the load carrying structure comprises a double skin structure, including a first membrane component and a second membrane component, wherein the first and the second membrane components are spaced apart and arranged approximately parallel to one another. A mechanical membrane component is a generally flat or virtually 2-dimensional component. A membrane component is generally realized in the form of a 3-dimensional body extending in a lengthwise-direction, crosswise-direction and a thickness-direction, which may be perpendicular with respect to one another, wherein the lengthwise-extension and the crosswise-extension are both significantly larger than the thickness-extension of the membrane component. In particular, the crosswise-extension and/or the lengthwise-extension are, respectively, at least 10 times larger, particularly at least 100 times larger, more particularly at least 1000 times larger, than the thickness-extension of the membrane component. A membrane component may be considered to receive and transfer mechanical stresses exclusively in its lengthwise-direction and/or in its crosswise-direction. Forces in the membrane component along its lengthwise-direction and/or its crosswise-direction may be described as membrane forces. In the context of the present disclosure, it shall be understood that membrane components arranged "approximately parallel" to one another may for example refer to the top and bottom shell component of an airplane wing box or the like. In particular, top shell component and bottom shell component, or the like, may include sections that are ideally parallel to one another. Particularly, approximately parallel top and bottom shell components, or the like, may include sections which are arranged at an angle and/or curvature in relation to one another and thus not ideally parallel. In particular, approximately parallel membrane components may be arranged with respect to one another at an acute angle of less than 20°, preferably less than 10°, or preferably less than 5°. The approximately parallel first and second membrane components of the aircraft may particularly refer to such sections of a loadbearing structure of the aircraft, such as a wing box, fuselage section or engine casing, which extend parallel a to one another in at least one direction, such as the lateral direction (or wingspan direction) and/or in the longitudinal direction of the aircraft, for a substantial lengthwise and/or crosswise parallel extension of at least 10 times, preferably at least 100 times, as much as the thickness-extension of the respective membrane components in the respective range or area.

In a further development of the aircraft, the first membrane component and/or the second membrane component comprises or consists of a polymer composite material, such as fiber reinforced polymer material, in particular a glass fiber and/or carbon fiber reinforced polymer material. Polymer composite materials have been successfully employed in aerospace applications particularly as membrane components forming double skin structures and are particularly suitable for use as a lightweight component which renders them particularly useful for VTOL-applications. Alternatively, the first membrane component and/or the second membrane component comprises or consists of a metallic material.

In another embodiment of an aircraft, which may be combined with the aforementioned ones, the rotary actor is rigidly coupled to a bracket which is preferably stationarily attached to the load carrying structure. In particular, the bracket is non-rotatably attached to the load carrying structure. The bracket may be directly attached to the load carrying structure or indirectly, for instance via a secondary bracket. In the case of an actor realized as an electric motor comprising a rotor and the stator, either one of the rotor or the stator may be stationarily coupled to the bracket; or coupled to the bracket indirectly via a transmission including an output shaft stationarily coupled to said bracket. For example, the actor may be provided with a torque output shaft that may be directly coupled to the stator, rotor, or which may be realized as an output shaft of the transmission, which is form-fittingly coupled to the bracket, for instance through a crown-spine connection.

In a further embodiment of an aircraft based on the aforementioned embodiments including the bracket and the double skin structure, the bracket may include a first lever such as a first nose coupled to the first membrane component and a second lever such as second nose coupled to the second membrane component. It may be preferred that the bracket includes one or two noses to enter a respective mechanical force received by the bracket as torque from the rotary actor into one or both of the membrane components of the load carrying double skin structure. A nose may refer to an outwardly, in particular radially outwardly, protruding lever section of the bracket, which protrusion serves to align the bracket with the respective first or second membrane component to provide an adequately connection with regard to stability and/or angular orientation with respect to the force transferred into the membrane component in a direction approximately or ideally in the respective lengthwise- and/or crosswise-a direction of the membrane component. The bracket may serve as a mechanical-lever-like component to transfer forces resulting from torque received from the rotary actor into the load carrying double skin structure using particularly lightweight components to enhance energy efficiency of the aircraft.

Embodiments of an aircraft are conceivable in which the bracket is configured and adapted to the load carrying structure such that forces are transferable through the bracket into and/or out of the load carrying structure in at least a direction corresponding to the first axis. Alternatively or additionally, the bracket may be configured and adapted to the load carrying structure such that forces are transferable through the bracket into and/or out of the load carrying structure in at least one direction perpendicular to that of the first axis, such as a longitudinal direction and/or the vertical direction. A force transmission through the bracket into and/or out of the load carrying structure may by a direct attachment of the bracket to the load carrying structure or, alternatively, by an indirect attachment of the bracket to the load carrying structure through for example a secondary bracket and possibly a linkage.

According to a further development, the bracket is coupled (directly) with the double skin structure such that torque from the rotary actor for actuating the variable lift body is introduced as a force couple through both the first and second nose into the double skin structure, wherein in particular the first nose is stationarily coupled with the first membrane component, whereas the second nose is stationarily coupled with the second membrane component. A force couple generally relates to a first mechanical force and a second mechanical force of the same amplitude but opposite, parallel direction. The first and second membrane component can be designed in a particularly thin and thus lightweight, energy saving manner if the breath is configured such that only linear, powerful forces are introduced into the membrane components, which linear forces are preferably aligned with the lengthwise- and/or crosswise-direction of the respective first or second membrane component.

According to an alternative embodiment, at least one lever attaches the bracket to a secondary bracket including a first web portion coupled to the first membrane component and a second portion coupled to the second membrane component. The lever can be rigidly attached to the bracket, which may be called primary bracket, or be rigidly attached to the secondary bracket. In particular, the lever can be made as one piece with either the primary or the secondary bracket. The lever extends crosswise, in particular perpendicular, with respect to the first axis, preferably in the longitudinal direction of the aircraft, between the primary and secondary bracket. In particular, the secondary bracket can be realized as a wing spar or as an aft spar. The secondary bracket is directly attached to the load carrying structure. The first and/or second web portion of the secondary bracket are adapted to the load carrying structure such that they extend in a three-dimensionally parallel manner with respect to the first or second membrane component, respectively. The primary and secondary bracket may be rigidly and non-rotatably attached to one another in a form-fitting and/or force-fitting manner, such as by bolting. For example, one or more barrel nuts may be used to attach the lever to the primary or secondary bracket.

According to a further development, the secondary bracket is coupled with the double skin structure such that torque from the rotary actor for actuating the variable lift body is introduced as a force couple through both the first and second web portion into the double skin structure, wherein in particular the first web portion is stationarily coupled with the first membrane component, whereas the second web portion is stationarily coupled with the second membrane component. A force couple generally relates to a first mechanical force and a second mechanical force of the same amplitude but opposite, parallel direction.

According to another further development, which may be combined with the aforementioned one, exactly one spherical bearing or at least one spherical bearing, in particular two or four spherical bearings, form the attachment of the bracket to the secondary bracket. In one exemplary embodiment, a lever rigidly attached to the primary bracket and extending therefrom in a direction crosswise, preferably perpendicular, with respect to the first axis, is connected to the secondary bracket via a spherical bearing, in particular exactly one spherical bearing. A spherical joint includes a concave reception and a spherical member arranged within the concave reception and rotatable relative to the spherical member around at least two, preferably around three different axes of rotation. The spherical member may be provided with one or two, preferably diametrically opposite, radial extensions, such as a pin, to attach the spherical member to another mechanical component, such as the fuselage, the variable lift body or the linkage. In an alternative exemplary embodiment, to levers, which may be realized as a first and second nose of the primary bracket, are provided with a respective spherical bearing connecting the first or second nose to a respective linkage. The respective linkage may be connected to the secondary bracket through a further spherical bearing each. The linkage extends from the primary bracket to the secondary bracket in a generally rectilinear direction crosswise, in particular perpendicular, with respect to the first axis. It may be preferred that the first and/or second linkage are arranged at an inclination with regard to a normal direction relative to the first axis, wherein in particular distance between the linkages at their attachment to the first and second nose may be larger than the distance between the linkages at their attachment to the secondary bracket. The attachment of the lever or linkage to the secondary bracket shall be arranged between the first and second web portion of the secondary bracket.

In yet a further development, that may be combined with the aforementioned one, the bracket includes around a section rigidly coupled to the rotary actor. The round section of the bracket may include an arcuate outline and/or an approximately circular yet rotationally-asymmetrical force coupling, such as a form-fitting connection, from the bracket to the rotary actor. It shall be clear that the bracket might either be directly stationarily coupled to the rotor or stator of the rotary actor (for example the housing or an output shaft of the rotary actor), or be stationarily coupled to a torque output shaft of a transmission driven by the rotary actor. The round section of the bracket may be arranged in parallel, in particular coaxially, with respect to an output shaft or torque output shaft of the rotary actor and/or a transmission driven by the rotary actor.

In a further development of the aircraft, a protrusion, in particular a lever, such as the first nose and/or the second nose, extends tangentially from the round section and/or with respect to the rotary axis of the output shaft or torque output shaft of the rotary actor and/or transmission driven thereby. In particular, the protrusions, which may be a first and a second nose, extend parallel to one another, particularly parallel with respect to the longitudinal direction of the aircraft, from the round section. The bracket including noses extending tangentially with respect to a rotary torque reception axis or a round section of the bracket had been shown to be a particularly suitable and lightweight solution to transfer forces, particularly force-couples from the rotary actor to a load carrying double skin structure. A tangential arrangement of the protrusion may be particularly preferred in case the rotary actor and/or transmission driven thereby has a diameter resembling the width of the aerofoil wherein it is arranged, such that the noses do not impair aerodynamic properties. Alternatively, at least one protrusion, in particular lever, such as either the first nose or the second nose, may protrude radially from the round section and/or with respect to the rotary axis of the output shaft or torque output shaft of the rotary actor and/or transmission driven thereby so as to act as a lever. In some cases, one or two radially protruding lever-like noses may be desired to increase force transmission, for instance in case of a rotary actor and/or transmission with a diameter substantially smaller than the width of the aerofoil wherein it is arranged.

According to a further development, the bracket, in particular an outer diameter thereof, preferably an outer diameter of the round section, defines an outer circumference which is smaller than the aerofoil surrounding the rotary actor and/or completely contained within the aerofoil of the variable lift body. It may be preferred that the maximal radial extension of the bracket in relation to its torque reception axis is larger than the maximal radial extension of the actor, particularly including an electric motor and possibly a transmission, with respect to said torque reception axis of the bracket. By containing the bracket as well as the rotary actor within the aerofoil of the variable lift body, it may be assured that no drag is caused by force and/or torque transmitting components.

In one particular embodiment of the aircraft it may be combined with any one of the aforementioned ones, the rotary actor, in particular both the rotor and the stator of an electric motor, and particularly additionally a torque output shaft of a transmission driven by an electric motor, are aligned in parallel, preferably coaxially, with the first axis. Such an arrangement has been shown to provide a particularly compact design minimizing both weight and volume in favor of an energy efficiency.

According to one embodiment of the aircraft, the aircraft includes primary lift body, such as a canard structure or wing structure, comprising a wing box realizing the load carrying structure, in p articular the load carrying double skin structure.

In one embodiment of an aircraft, the variable lift body includes an engine adapted to provide thrust for the aircraft for at least one of takeoff, landing, or cruising. The variable lift body may include an engine for providing thrust to the aircraft. The variable lift body in particular includes an engine pivotable in relation to the load carrying structure, which may be realized as an aircraft fuselage and/or as a wingbox of a primary lift body, such as a canard structure or a main wing, which primary lift body may be stationarily and/or rigidly attached to the fuselage, between a cruising flight position in which the thrust direction of the engine is aligned with the longitudinal axis of the aircraft, and a takeoff and landing or hover position in which the thrust direction of the engine is angled towards the vertical axis of the aircraft.. In particular, in the cruising flight position, the thrust direction of the engine may be parallel to the heading direction or the roll axis or may be inclined to the heading direction or the roll axis by an angle smaller than 15°. In particular, in the hover position, the thrust direction of the engine may be parallel to the vertical direction or may be inclined to the vertical axis or yaw axis by an angle smaller than 15°. The aircraft can include at least one variable lift body including an engine in the rear of the aircraft, in particular in combination with a primary lift body. Alternatively or additionally, the aircraft can include at least one variable lift body including an engine in the front of the aircraft, in particular in the manner of, instead of, or in combination with a canard. Alternatively or additionally, the aircraft can include at least one variable lift body including an engine attached to the central section of the aircraft with regard to its lengthwise extension, in particular in combination with a primary lift body. The aircraft can include a plurality of engines arranged side-by-side in a row transversely to the direction of flow and/or in the direction of the first axis. It may be preferred that the at least one engine is an electrically driven ducted fan.

In another embodiment of an aircraft, that may be combined with the aforementioned one, the variable lift body includes an aerodynamic control structure, such as a control canard, a canard structure, an aileron or landing flap.

In yet another embodiment of an aircraft, that may be combined with one or more of the aforementioned ones, the aircraft includes at least one primary lift body, such as a canard structure and/or a wing, which is stationarily attached to the load carrying structure, wherein the variable lift body is attached to the primary lift body. The primary lift body may have a relatively large surface area extending in the wing span direction and the longitudinal direction of the aircraft. The primary lift body may be a statically loadbearing element for providing a lifting force during cruising flight of the aircraft in the primary cruise flight direction. It may be preferred that the primary lift body is integrally connected to the fuselage of the aircraft. In particular, the variable lift body is arranged behind the primary lift body with regard to the cruise flight direction of the aircraft.

According to another embodiment, the aircraft includes at least one, in particular electrically powered, ducted fan engine. Preferably, the aircraft may include a plurality of ducted fan engines, which may be provided in an even number of sets distributed on both lateral sides with respect to the fuselage of the aircraft, for instance to load carrying primary lift bodies or indirectly to the fuselage. According to this embodiment, the ducted fan engine includes a rotor rotatably mounted within a casing. The casing, in particular the inner circumference thereof facing the fan rotor, may preferably be cylindrical.

The aircraft may in particular be configured for carrying at least one human passenger, preferably several human passengers, and/or comprising at least one electrically powered flight propulsion system, preferably a flight propulsion system for electronic vertical takeoff and landing.

### Brief description of the drawings/figures

Preferred configurations of the invention are described in the dependent claims. The accompanying drawings illustrate the embodiments of the present disclosure and, together with the description, further serve to explain the principles of the embodiments and to enable a person skilled in the pertinent art to make and use the embodiments.
- Fig. 1a: a perspective view of an aircraft according to the invention comprising a variable lift body arranged in a vertical take-off/landing position;
- Fig. 1b: a schematic view of the variable lift body according to Fig. 1a;
- Fig. 2a: a perspective view of the aircraft according to Fig. 1a wherein the variable lift body is arranged in a tilted position;
- Fig. 2b: a schematic view of the variable lift body according to Fig. 2a;
- Fig. 3: a schematic view of the variable lift body in a cruising position;
- Fig. 4: an exemplary variable lift body realized as an aileron including a set of three ducted fan engines;
- Fig. 5: an exemplary embodiment including a bracket directly connecting a load carrying structure with a variable lift body;
- Fig. 6: an exemplary embodiment including a bracket directly connecting a load carrying structure with a variable lift body indirectly via a secondary bracket;
- Fig. 7: another exemplary embodiment of a bracket directly connecting a load carrying structure with a variable lift body indirectly via a secondary bracket; and
- Fig. 8: a further exemplary embodiment including a bracket directly connecting a load carrying structure with a variable lift body via a secondary bracket.

The exemplary embodiments of the present disclosure will be described with reference to the accompanying drawings. Elements, features and components that are identical, functionally identical and have the same effect are - insofar as is not stated otherwise - respectively provided with the same reference character.

Reference numeral 1 generally designates an aircraft according to the invention, having as its main constituents a fuselage 2 and a variable lift body 5. The fuselage 2 may be provided with at least one primary lift body 4 rigidly or even integrally attached to the fuselage 2.

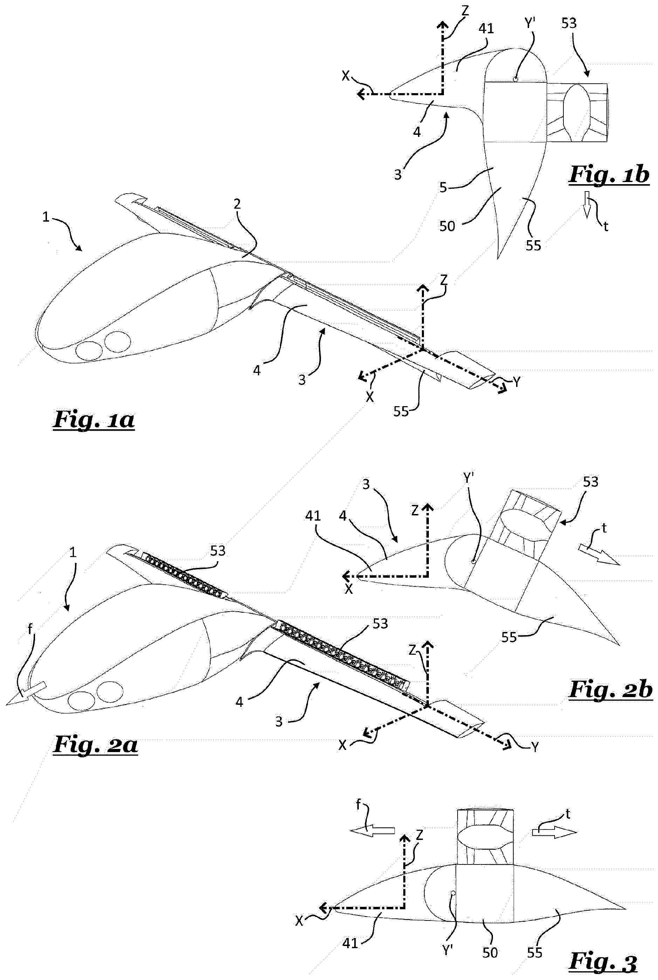

Fig. 1a and Fig. 2a show the aircraft 1 having the variable lift body 5 arranged in different pivoting positions in relation to the fuselage 2. Fig. 1a shows the variable lift body 5 including an aileron 55 and an a set of three electrically powered ducted fan engines 53 arranged in a vertical take-off/landing or hovering position which is shown in further detail in Fig. 1b. Fig. 2a shows the same variable lift body 5 in a tilted intermediate pivoting position which may correspond to a state after take-off and before cruise flight or after cruise flight and before landing, which is shown in further detail in Fig. 2b. The set of electrically powered ducted fan engines 53 is arranged immediately adjacent one another in the direction of the first axis Y of the aircraft. Fig. 3 shows once again the same variable lift body 5, however, arranged in alignment with the primary lift body 4 and thus in a cruise flight position in which the direction of thrust t of the engine 53 is aligned with the forward cruise flight direction f. The forward cruise flight direction f may correspond to the longitudinal axis or roll axis X of the aircraft.

In the illustrated embodiment, the variable lift body 5 is rotatably attached to the fuselage 2 via the main or primary lift body 4. In relation to the fuselage 2 of the primary lift body 4, the variable lift body 5 is pivotable around a first axis Y corresponding to the direction of the wing span. The first axis Y may correspond to the lateral axis or pitch axis of the aircraft 1.

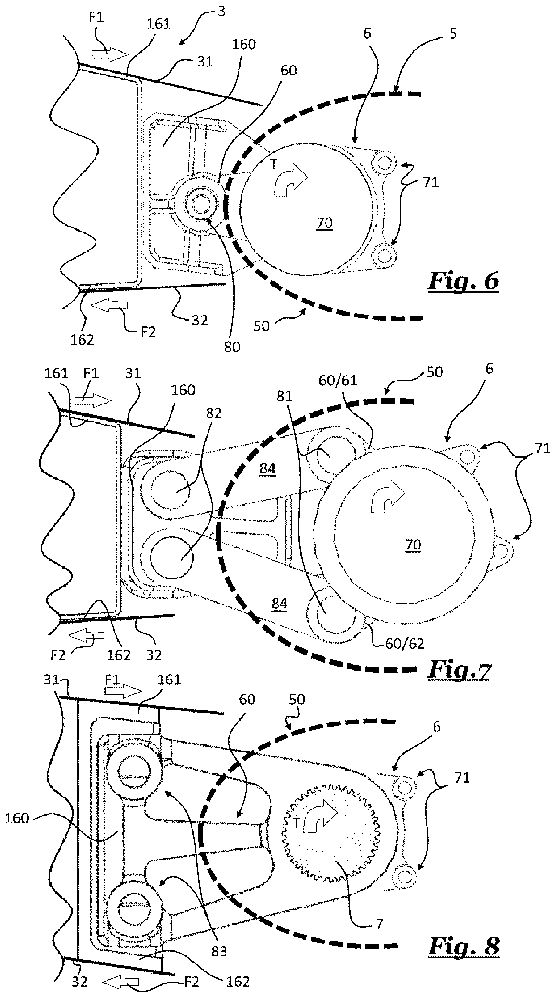

The weight of the variable lift body 5 and/or the thrust provided by the engines 53 transferred from the variable lift body 5 to the fuselage 2 through a connection which may be realized by a bracket such as described in further detail below with regard to Fig. 6. The connection is configured to transfer torque from the variable lift body 5 to the fuselage 2 and vice versa around the first axis Y.

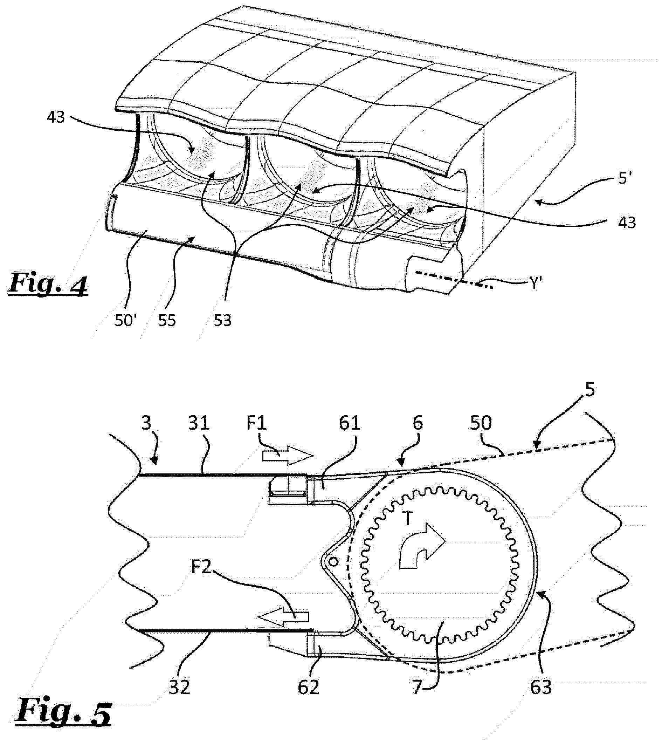

Fig. 4 shows a perspective schematic sectional view through an exemplary variable lift body 5' that consists mainly of an engine 53 surrounded by a casing 43 defining a first aerofoil 50' defining the aerodynamic streamlining properties of the first variable lift body 5'. Inside of the encasing defined by the aerofoil 50', a rotary actor is arranged which is adapted to set the pivoting position of the aileron 55 and engines 53 in relation to the aircraft's 1 fuselage 2. The attachment to the fuselage 2 is realized indirectly by means of the connection attaching the aileron 55 to the wing box 41. One particular embodiment of such a connection is described below in relation to Fig. 6.

The rotary actor is rigidly connected to the variable lift body 5' through a support section. The rotary actor has an output shaft rotatable in relation to the support section. The output shaft is rigidly attached to the connection to define the pivoting position of the variable lift body 5' in relation to the wing box 41. The rotary actor may include an electromotor coupled to a self-locking transmission adapted to provide low angular velocity and high torque to the output shaft from the electromotor. The output shaft and the rotary actor extend coaxially to the first axis Y'. In the direction of the first axis Y', the rotary actor is arranged adjacent to the connection (not shown in detail).

Fig. 5 shows an exemplary embodiment of a bracket 6 connecting a load carrying structure 3 with a variable lift body 5. It shall be understood that the bracket 6 connection can be employed in an aircraft according to the invention in one or several couplings of the respective load carrying structure 3 to a corresponding variable lift body. For example, the bracket 6 connection might attach an aileron 55 and/or engine 53 to the wing box 41 of a main wing 4 or canard structure (not shown), or even directly to a section of the fuselage 2 (not shown in detail).

The connection shown in Fig. 6 shows a bracket having a round section extending articulately over a range of more than 180°, coaxially with an electric motor provided with a transmission acting as a rotary actor. The torque output shaft 7 of the rotary actor is non-rotatably or in other words stationarily fixed to the round section of the bracket 6. The bracket 6 is non-rotatably fixed to the load carrying structure 3 which, in the exemplary embodiment shown in Fig. 6, is realized as a double skin structure including a first membrane component 31 and a second membrane component 32.

The first and second membrane components 31, 32 extend in parallel to one another in the proximity of the connection bracket 6. In order to connect the bracket 6 with the load carrying double skin structure 3, the bracket is integrally provided with noses 61, 62 extending tangentially at diametrically opposite ends of the round section of the bracket 6. The first nose 61 is attached to the first membrane component 31, and the second nose 62 is attached to the second membrane component 32. Each attachment of a nose 61/62 to the respective membrane component 31/32 is configured such that any torque T received from the rotary actor by the bracket 6 is transferred into the respective membrane component 31/32 of the load carrying structure 3 as a linear force F1/F2 defining a respective force vector extending exclusively in the lengthwise and/or crosswise direction of the respective membrane component 31/32. In the present embodiment, the linear forces F1 and F2 which are entered from the bracket 6 into the load carrying structure 3 have force vectors parallel to one another such that the forces F1/F2 realize a force couple.

In the embodiment shown in Fig. 5, each nose 61/62 is attached to an underside of the membrane component 31/32. Alternatively, at least one nose could be attached to the upside of the respective membrane component (not shown). Further, it is conceivable, that at least one nose forms a fork-like reception for receiving the respective membrane component, wherein the respective nose comprises an upper fork section and a respective lower fork section, wherein the fork sections receive between themselves the membrane component (not shown). As yet another alternative, the membrane component may comprise two connection tongues, an upper and a lower connection tongue, which may receive between themselves a corresponding nose (not shown).

The outer diameter defined by the round section of the bracket 6 is at least as large as the maximum outer diameter of the rotary actor (due to which the rotary actor is hidden by the bracket in the cross-sectional view shown in Fig. 5). The round section of the bracket 6 as well as the rotary actor are completely contained within the aerofoil 50 of the variable lift member 5.

Fig. 6 shows a different embodiment in which the bracket 6 provided with a servomotor 70 for tilting the variable lift body is indirectly coupled to a loadbearing structure 3 through a secondary bracket 160 which may be realized as a spar, such as a wing spar or aft spar. The bracket 6 has a single, radially protruding lever 60 extending from the bracket 6 in a direction generally perpendicular to the first axis Y, essentially in the longitudinal direction Y. The lever 60 is provided with a single spherical bearing 80 in its distal end with regard to the bracket 6 and on the other side attached to the secondary bracket 160. The secondary bracket has two forwardly projecting web portions 161, 162, each of which is attached to a respective first or second membrane component 31, 32 of the load carrying structure 3 so as to introduce a force couple F1, F2 into the double skin structure according to the torque T provided by the servomotor 70.

The bracket 6 may have one or more servo mounting points 71 interfacing with the variable lift body, such as a flap or other control structure. The shown configuration may be complemented by one, two or more additional bearings for transferring forces to the load carrying structure 3 and the variable lift body 5 (not shown) in the direction of the first axis X as well as possibly in the direction of a second axis Y and/or a third axis Z perpendicular to first axis X. One of these bearings may be located in the proximity to the illustrated linkage whereas another one of these bearings may be located in a larger distance thereto.

Fig. 7 shows yet another embodiment in which the bracket 6 provided with a servomotor 70 is attached to the load carrying structure 3 through a secondary bracket 160 connected to the primary bracket 6 by two linkages 84, each having a pair of spherical bearings 81, 82 attached to either end thereof 4 for attachment with on the one hand the first bracket 6 and on the other hand the second bracket 160. The linkage 84 may be realized as a generally rectilinear rod-like structure. The rearward facing end of the linkage 84 is attached through a trailing spherical bearing 81 with a protruding lever 60 of the bracket 6. The forward facing end of the linkage 84 is attached through a leading spherical bearing 82 with the secondary bracket 160. The distance of the linkages 84 is further apart at their trailing end then at their leading end. The levers 60 holding the linkages 84 may be realized as a first and second nose 61, 62 of the bracket 6. Except for the use of the linkages 84, the embodiment shown in Fig. 7 essentially corresponds to that described with regard to Fig. 6.

Fig. 8 shows a further embodiment in which a spline connection attaches an output shaft 7 of the servomotor to the bracket 6. The primary bracket 6 has a forking lever 60 attached to the secondary bracket 160. The attachment of primary and secondary bracket to one another can, for example, be realized by a pair of the barrel nuts 83. The secondary bracket 160 has rearwardly facing web portions 161, 162 extending spatially parallel with respect to the first and second wing skin structure 31, 32 for attachment thereto. The compact architectures shown in figure 8 transfers all loads from the variable lift body 5 to the load carrying structure 3 through the brackets 6, 160.

The brackets in the embodiments shown in Fig. 6, 7 and 8 allow freedom of rotational movement around a second axis crosswise, in particular perpendicular, to the first axis and/or with regard to a third axis crosswise, in particular perpendicular, to the first and second axis. The second and third axis are different from the first axis. The second or third axis may for instance correspond to the longitudinal axis and/or roll axis X of the aircraft. Alternatively, the second axis may correspond to the vertical axis and/or yaw axis Z of the aircraft.

The features disclosed in the above description, in the figures and in the claims can be of importance both individually and in any combination for the realization of the invention in its various configurations.

### Reference numbers

- 1: aircraft
- 2: fuselage
- 3: load carrying structure
- 4: primary lift body
- 5, 5': variable lift body
- 6: bracket
- 7: torque output shaft
- 31: first membrane component
- 32: second membrane component
- 41: wingbox
- 43: casing
- 50, 50': aerofoil
- 55: aileron
- 53: ducted fan engine
- 60: lever
- 61: first nose
- 62: second nose
- 63: round section
- 70: servo
- 71: servo mounting point
- 80, 81, 82: spherical bearing
- 83: barrel nut
- 160: secondary bracket
- 161: web portion
- 162: web portion

- t: thrust direction
- f: cruise flight direction
- F1, F2: force
- T: actor torque
- Y, Y', Y": first axis
- X: longitudinal axis
- Z: vertical axis

## Claims

1. Aircraft (1), particularly an aircraft capable of vertical take-off and landing, comprising a load carrying structure (3), and a variable lift body (5, 5') defining an aerofoil (50, 50') and being moveably attached to the load carrying structure (3), wherein the variable lift body (5, 5') includes an aerodynamic control structure, such as an aileron (55) or a control canard, wherein the variable lift body (5, 5',) is pivotable around a first axis (Y), wherein the aircraft further includes a rotary actor adapted to cause the variable lift body to pivot in relation to the load carrying structure (3), and wherein the variable lift body (5) includes an engine (53) adapted to provide thrust for the aircraft (1) for at least one of take-off, landing, or cruising, **characterised in that** the rotary actor is arranged within the aerofoil (50, 50').

2. Aircraft (1) according to claim 1, **characterized in that** the load carrying structure (3) comprises a double skin structure, including a first membrane component (31) and a second membrane component (32), wherein the first and the second membrane components (31, 32) are spaced apart and extend arranged parallel to one another in the lateral direction and/or in the longitudinal direction of the aircraft for a lengthwise and/or crosswise parallel extension of at least 10 times as much as a thickness-extension of the respective membrane components in the respective range.

3. Aircraft (1) according to claim 2, **characterized in that** the first and/or second membrane component (31, 32) comprises or consists of a polymer composite material, such as a fiber reinforced polymer material, in particular a glass fiber and/or a carbon fiber reinforced polymer material.

4. Aircraft (1) according to one of the preceding claims, **characterized in that** the rotary actor is rigidly coupled to a bracket (6) attached to the load carrying structure (3), in particular non-rotatably.

5. Aircraft (1) according to claim 4 and claim 2 or 3, **characterized in that** the bracket (6) includes a first nose (60, 61) coupled to the first membrane component (31) and a second nose (60, 62) coupled to the second membrane component (32).

6. Aircraft (1) according to claim 5, **characterized in that** the bracket (6) is coupled with the double skin structure such that torque (T) from the rotary actor for actuating the variable lift body (5, 5') is introduced as a force couple (F1, F2) through first and second nose (61, 62) into double skin structure.

7. Aircraft (1) according to claim 4 and claim 2 or 3, **characterized in that** at least one lever (60) attaches the bracket (6) to a secondary bracket (160) including a first web portion (161) coupled to the first membrane component (31) and a second web portion (162) coupled to the second membrane component (32).

8. Aircraft (1) according to claim 7, **characterized in that** the secondary bracket (160) is coupled with the double skin structure such that torque (T) from the rotary actor for actuating the variable lift body (5, 5') is introduced as a force couple (F1, F2) through first and second web portion (161, 162) into double skin structure.

9. Aircraft (1) according to claim 7 or 8, **characterized in that** exactly one or at least one spherical bearing (80, 81, 82), in particular two or four spherical bearings (81, 82), form the attachment of the bracket (6) to the secondary bracket (160).

10. Aircraft (1) according to one of the claims 4 to 9, **characterized in that** the bracket (6) includes a round section (63) rigidly coupled to the rotary actuator of the rotary actuator.

11. Aircraft (1) according to claim 10, **characterized in that** a protrusion, in particular a lever (60), such as the first and/or second nose (60, 61, 62), extends tangentially from the round section (63).

12. Aircraft (1) according to claim 10 or 11, **characterized in that** the bracket (6), in particular an outer diameter of the round section (63), defines an outer circumference, smaller than and/or completely contained within the aerofoil (50, 50') of the variable lift body (5, 5').

13. Aircraft (1) according to one of the preceding claims, **characterized in that** the rotary actor comprising an electric motor includes a rotor and a stator both which are aligned in parallel, preferably coaxially, with the first axis (Y).

14. Aircraft (1) according to one of the preceding claims, **characterized in that** the aircraft (1) includes a primary lift body (4) comprising a wingbox (41) which realizes the load carrying structure (3).

15. Aircraft (1) according to one of the preceding claims, **characterized in that** the variable lift body (5) includes an engine (53) pivotable in relation to the fuselage (2) between a cruising flight position in which the thrust direction (t) of the engine (53) is aligned with the longitudinal axis (X) of the aircraft (1), and a take-off/landing position in which the thrust direction (t) is angled towards the vertical axis (Z) of the aircraft (1).

16. Aircraft (1) according to one of the preceding claims, wherein the at least one primary lift body (4), such as a canard structure and/or a wing, is stationarily attached to the fuselage (2), **characterized in that** the variable lift body (5, 5') is attached to a primary lift body (4), wherein in particular the variable lift body (5, 5',) is arranged behind the primary lift body (4) with regard to the cruise flight direction (f).

17. Aircraft (1) according to one of the claims 1 to 16, **characterized in that** the aircraft (1) includes at least one, in particular electrically powered, ducted fan engine (53), preferably a plurality of ducted fan engines (53), including a rotor rotatably mounted within a, preferably cylindrical, casing (43).

## Patentansprüche

1. Flugzeug (1), insbesondere ein Flugzeug, das zum vertikalen Starten und Landen in der Lage ist, umfassend eine lasttragende Struktur (3) und einen variablen Auftriebskörper (5, 5'), der eine Tragfläche (50, 50') definiert und beweglich an der lasttragenden Struktur (3) angebracht ist, wobei der variable Auftriebskörper (5, 5') eine aerodynamische Steuerstruktur, wie etwa ein Querruder (55) oder ein Steuercanard, beinhaltet, wobei der variable Auftriebskörper (5, 5') um eine erste Achse (Y) schwenkbar ist, wobei das Flugzeug ferner einen Drehaktor beinhaltet, der dazu ausgelegt ist, zu bewirken, dass der variable Auftriebskörper in Bezug auf die lasttragende Struktur (3) schwenkt, und wobei der variable Auftriebskörper (5) ein Triebwerk (53) beinhaltet, das dazu ausgelegt ist, Schub für das Flugzeug (1) für mindestens eines von Starten, Landen oder Reisen bereitzustellen, **dadurch gekennzeichnet, dass** der Drehaktor innerhalb der Tragfläche (50, 50') angeordnet ist.

2. Flugzeug (1) nach Anspruch 1, **dadurch gekennzeichnet, dass** die lasttragende Struktur (3) eine Doppelhautstruktur umfasst, die eine erste Membrankomponente (31) und eine zweite Membrankomponente (32) beinhaltet, wobei die erste und die zweite Membrankomponente (31, 32) voneinander beabstandet sind und sich parallel zueinander in der seitlichen Richtung und/oder in der Längsrichtung des Flugzeugs für eine längs und/oder quer parallele Erstreckung von mindestens 10 Mal so viel wie eine Dickenerstreckung der jeweiligen Membrankomponenten in dem jeweiligen Bereich erstrecken.

3. Flugzeug (1) nach Anspruch 2, **dadurch gekennzeichnet, dass** die erste und/oder zweite Membrankomponente (31, 32) ein Polymerverbundmaterial, wie etwa ein faserverstärktes Polymermaterial, insbesondere ein glasfaser- und/oder kohlenstofffaserverstärktes Polymermaterial, umfasst oder daraus besteht.

4. Flugzeug (1) nach einem der vorhergehenden Ansprüche, **dadurch gekennzeichnet, dass** der Drehaktor starr mit einer Halterung (6) gekoppelt ist, die an der lasttragenden Struktur (3) angebracht ist, insbesondere drehfest.

5. Flugzeug (1) nach Anspruch 4 und Anspruch 2 oder 3, **dadurch gekennzeichnet, dass** die Halterung (6) eine erste Nase (60, 61), die mit der ersten Membrankomponente (31) gekoppelt ist, und eine zweite Nase (60, 62), die mit der zweiten Membrankomponente (32) gekoppelt ist, umfasst.

6. Flugzeug (1) nach Anspruch 5, **dadurch gekennzeichnet, dass** die Halterung (6) derart mit der Doppelhautstruktur gekoppelt ist, dass ein Drehmoment (T) von dem Drehaktor zum Betätigen des variablen Auftriebskörpers (5, 5') als ein Kraftpaar (F1, F2) durch die erste und die zweite Nase (61, 62) in die Doppelhautstruktur eingeleitet wird.

7. Flugzeug (1) nach Anspruch 4 und Anspruch 2 oder 3, **dadurch gekennzeichnet, dass** mindestens ein Hebel (60) die Halterung (6) an einer sekundären Halterung (160) anbringt, die einen ersten Stegabschnitt (161), der mit der ersten Membrankomponente (31) gekoppelt ist, und einen zweiten Stegabschnitt (162), der mit der zweiten Membrankomponente (32) gekoppelt ist, umfasst.

8. Flugzeug (1) nach Anspruch 7, **dadurch gekennzeichnet, dass** die sekundäre Halterung (160) derart mit der Doppelhautstruktur gekoppelt ist, dass ein Drehmoment (T) von dem Drehaktor zum Betätigen des variablen Auftriebskörpers (5, 5') als ein Kraftpaar (F1, F2) durch den ersten und den zweiten Stegabschnitt (161, 162) in die Doppelhautstruktur eingeleitet wird.

9. Flugzeug (1) nach Anspruch 7 oder 8, **dadurch gekennzeichnet, dass** genau ein oder mindestens ein Kugellager (80, 81, 82), insbesondere zwei oder vier Kugellager (81, 82), die Anbringung der Halterung (6) an der sekundären Halterung (160) bilden.

10. Flugzeug (1) nach einem der Ansprüche 4 bis 9, **dadurch gekennzeichnet, dass** die Halterung (6) einen runden Abschnitt (63) umfasst, der starr mit dem Drehaktor des Drehaktors gekoppelt ist.

11. Flugzeug (1) nach Anspruch 10, **dadurch gekennzeichnet, dass** sich ein Vorsprung, insbesondere ein Hebel (60), wie etwa die erste und/oder zweite Nase (60, 61, 62), tangential von dem runden Abschnitt (63) erstreckt.

12. Flugzeug (1) nach Anspruch 10 oder 11, **dadurch gekennzeichnet, dass** die Halterung (6), insbesondere ein Außendurchmesser des runden Abschnitts (63), einen Außenumfang definiert, der kleiner als die Tragfläche (50, 50') des variablen Auftriebskörpers (5, 5') ist und/oder vollständig darin enthalten ist.

13. Flugzeug (1) nach einem der vorhergehenden Ansprüche, **dadurch gekennzeichnet, dass** der Drehaktor, der einen Elektromotor umfasst, einen Rotor und einen Stator umfasst, die beide parallel, vorzugsweise koaxial, zu der ersten Achse (Y) ausgerichtet sind.

14. Flugzeug (1) nach einem der vorhergehenden Ansprüche, **dadurch gekennzeichnet, dass** das Flugzeug (1) einen primären Auftriebskörper (4) umfasst, der einen Flügelkasten (41) umfasst, der die lasttragende Struktur (3) bildet.

15. Flugzeug (1) nach einem der vorhergehenden Ansprüche, **dadurch gekennzeichnet, dass** der Körper mit variablem Auftrieb (5) ein Triebwerk (53) beinhaltet, das in Bezug auf den Rumpf (2) zwischen einer Reiseflugposition, in der die Schubrichtung (t) des Triebwerks (53) mit der Längsachse (X) des Flugzeugs (1) ausgerichtet ist, und einer Start-/Landeposition, in der die Schubrichtung (t) in Richtung der vertikalen Achse (Z) des Flugzeugs (1) abgewinkelt ist, schwenkbar ist.

16. Flugzeug (1) nach einem der vorhergehenden Ansprüche, wobei der mindestens eine primäre Auftriebskörper (4), wie etwa eine Canardstruktur und/oder ein Flügel, stationär an dem Rumpf (2) angebracht ist, **dadurch gekennzeichnet, dass** der Körper mit variablem Auftrieb (5, 5') an einem primären Auftriebskörper (4) angebracht ist, wobei insbesondere der Körper mit variablem Auftrieb (5, 5') in Bezug auf die Reiseflugrichtung (f) hinter dem primären Auftriebskörper (4) angeordnet ist.

17. Flugzeug (1) nach einem der Ansprüche 1 bis 16, **dadurch gekennzeichnet, dass** das Flugzeug (1) mindestens ein, insbesondere elektrisch angetriebenes, Mantelpropellertriebwerk (53), vorzugsweise eine Vielzahl von Mantelpropellertriebwerken (53), einschließlich eines Rotors, der drehbar in einem, vorzugsweise zylindrischen, Gehäuse (43) montiert ist, beinhaltet.

## Revendications

1. Aéronef (1), en particulier un aéronef capable de décollage et d'atterrissage verticaux, comprenant une structure de support de charge (3), et un corps à portance variable (5, 5') définissant une surface portante (50, 50') et étant fixé de manière mobile à la structure de support de charge (3), dans lequel le corps à portance variable (5, 5') comprend une structure de commande aérodynamique, telle qu'un aileron (55) ou un canard de commande, dans lequel le corps à portance variable (5, 5') peut pivoter autour d'un premier axe (Y), dans lequel l'aéronef comprend en outre un actionneur rotatif adapté pour amener le corps à portance variable à pivoter par rapport à la structure de support de charge (3), et dans lequel le corps à portance variable (5) comprend un moteur (53) adapté pour fournir une poussée à l'aéronef (1) pour au moins l'un d'un décollage, d'un atterrissage ou d'un vol de croisière, **caractérisé en ce que** l'actionneur rotatif est agencé à l'intérieur de la surface portante (50, 50').

2. Aéronef (1) selon la revendication 1, **caractérisé en ce que** la structure de support de charge (3) comprend une structure à double revêtement, comprenant un premier composant de membrane (31) et un second composant de membrane (32), dans lequel les premier et second composants de membrane (31, 32) sont espacés et s'étendent parallèlement l'un de l'autre dans la direction latérale et/ou dans la direction longitudinale de l'aéronef pour une extension substantielle parallèle dans le sens de la longueur et/ou dans le sens transversal d'au moins 10 fois autant qu'une extension d'épaisseur des composants de membrane respectifs dans la plage respective.

3. Aéronef (1) selon la revendication 2, **caractérisé en ce que** le premier et/ou le second composant de membrane (31, 32) comprend ou se compose d'un matériau composite polymère, tel qu'un matériau polymère renforcé de fibres, en particulier un matériau polymère renforcé de fibres de verre et/ou de fibres de carbone.

4. Aéronef (1) selon l'une des revendications précédentes, **caractérisé en ce que** l'actionneur rotatif est couplé de manière rigide à un support (6) fixé à la structure de support de charge (3), en particulier de manière solidaire en rotation.

5. Aéronef (1) selon la revendication 4 et la revendication 2 ou 3, **caractérisé en ce que** le support (6) comprend un premier nez (60, 61) couplé au premier composant de membrane (31) et un second nez (60, 62) couplé au second composant de membrane (32).

6. Aéronef (1) selon la revendication 5, **caractérisé en ce que** le support (6) est couplé à la structure à double peau de telle sorte qu'un couple (T) provenant de l'actionneur rotatif pour actionner le corps de portance variable (5, 5') est introduit en tant que couple de force (F1, F2) à travers les premier et second nez (61, 62) dans la structure à double peau.

7. Aéronef (1) selon la revendication 4 et la revendication 2 ou 3, **caractérisé en ce qu'**au moins un levier (60) fixe le support (6) à un support secondaire (160) comprenant une première partie d'âme (161) couplée au premier composant de membrane (31) et une seconde partie d'âme (162) couplée au second composant de membrane (32).

8. Aéronef (1) selon la revendication 7, **caractérisé en ce que** le support secondaire (160) est couplé à la structure à double peau de telle sorte qu'un couple (T) provenant de l'actionneur rotatif pour actionner le corps de portance variable (5, 5') est introduit en tant que couple de force (F1, F2) à travers les première et seconde parties d'âme (161, 162) dans la structure à double peau.

9. Aéronef (1) selon la revendication 7 ou 8, **caractérisé en ce qu'**exactement un ou au moins un palier sphérique (80, 81, 82), en particulier deux ou quatre paliers sphériques (81, 82), forment la fixation du support (6) au support secondaire (160).

10. Aéronef (1) selon l'une des revendications 4 à 9, **caractérisé en ce que** le support (6) comprend une section ronde (63) couplée de manière rigide à l'actionneur rotatif de l'actionneur rotatif.

11. Aéronef (1) selon la revendication 10, **caractérisé en ce qu'**une saillie, en particulier un levier (60), tel que le premier et/ou le second nez (60, 61, 62), s'étend tangentiellement à partir de la section ronde (63).

12. Aéronef (1) selon la revendication 10 ou 11, **caractérisé en ce que** le support (6), en particulier un diamètre extérieur de la section ronde (63), définit une circonférence extérieure, plus petite que et/ou complètement contenue à l'intérieur de la surface portante (50, 50') du corps de portance variable (5, 5').

13. Aéronef (1) selon l'une des revendications précédentes, **caractérisé en ce que** l'actionneur rotatif comprenant un moteur électrique comprend un rotor et un stator qui sont tous deux alignés parallèlement, de préférence coaxialement, au premier axe (Y).

14. Aéronef (1) selon l'une des revendications précédentes, **caractérisé en ce que** l'aéronef (1) comprend un corps de portance primaire (4) comprenant un caisson d'aile (41) qui réalise la structure de support de charge (3).

15. Aéronef (1) selon l'une des revendications précédentes, **caractérisé en ce que** le corps à portance variable (5) comprend un moteur (53) pouvant pivoter par rapport au fuselage (2) entre une position de vol de croisière dans laquelle la direction de poussée (t) du moteur (53) est alignée avec l'axe longitudinal (X) de l'aéronef (1), et une position de décollage/atterrissage dans laquelle la direction de poussée (t) est inclinée vers l'axe vertical (Z) de l'aéronef (1).

16. Aéronef (1) selon l'une des revendications précédentes, dans lequel l'au moins un corps de portance primaire (4), tel qu'une structure canard et/ou une aile, est fixé de manière stationnaire au fuselage (2), **caractérisé en ce que** le corps à portance variable (5, 5') est fixé à un corps de portance primaire (4), dans lequel en particulier le corps à portance variable (5, 5') est agencé derrière le corps de portance primaire (4) par rapport à la direction de vol de croisière (f).

17. Aéronef (1) selon l'une des revendications 1 à 16, **caractérisé en ce que** l'aéronef (1) comprend au moins un moteur à soufflante canalisé (53), en particulier alimenté électriquement, de préférence une pluralité de moteurs à soufflante canalisés (53), comprenant un rotor monté de manière rotative à l'intérieur d'un carter (43), de préférence cylindrique.
